# EUROPEAN PATENT SPECIFICATION

(11) **EP 2 158 162 B1**
(45) Date of publication and mention of the grant of the patent: **03.11.2010**
(21) Application number: 08720197.6
(22) Date of filing: 18.01.2008
(51) Int. Cl.: C02F 1/42, C02F 5/00

(54) **CONTAINER FOR A WATER TREATMENT SYSTEM**
BEHÄLTER FÜR EIN WASSERBEHANDLUNGSSYSTEM
CONTENEUR POUR SYSTÈME DE TRAITEMENT D'EAU

(30) Priority: 12.06.2007 IT BS20070081
(43) Date of publication of application: 03.03.2010
(73) Proprietor: HYDRO SYSTEM TREATMENT S.R.L., 25020 San Gervasio Bresciano (IT)
(72) Inventor: ZINONI, Francesco, 25020 San Gervasio Bresciano (Brescia) (IT); BERTOLI, Lorenzo, 25020 Cignano Di Offlaga (Brescia) (IT)
(74) Representative: Pulieri, Gianluca Antonio
(86) International application number: PCT/IT2008/000027
(87) International publication number: WO 2008/152668

(56) References cited:
- WO-A-2006/016385

## Description

The present invention relates to a container for a water treatment system, for example a system for the decalcification of water provided by waterworks.

The systems for treating water provided by water mains, for example waterworks, are becoming increasingly widespread both in the household and in the industrial usage field.

More and more, households, blocks of flats or workplaces are provided with a system of such type, for example with the purpose of decalcifying water or in any case changing the physical-chemical characteristics thereof to make it more suitable to be used as drinking water.

Similarly, in the industrial field, the water supplied by the water mains or taken from rivers, lakes or from the sea, is treated before it is used in a particular production cycle, in order to make it suitable for such cycle.

Water treatment systems are installed upstream of the household or industrial distribution network, and generally comprise a tank containing water and a set of organic resins, called filtering bed, the composition whereof is in relation to the specific treatment water must be subject to.

An example of embodiment of a tank for a water treatment system is described in International Patent WO 2005/098306 by the Applicant. The tank is generally seated in a container and is partly immersed in a pickle consisting of salt and water already treated.

While the tank coating is made of highly biocompatible materials, and suitable for not releasing any harmful substances for man when it contacts the pickle contained in the container, it has been found that the users of such systems think the condition of the pickle in contact with the tank coating is not very hygienic.

For this reason, the Applicant had already devised the container described in International Application WO 2006/016385.

The object of the present invention is to provide a container for a water treatment system which should be further improved compared to the known one.

In particular, the object of the present invention is to provide a container having a particularly compact and less cumbersome appearance.

Such object is achieved by a container obtained according to claim 1. The dependent claims describe embodiment variants.

The features and advantages of the container according to the present invention will appear more clearly from the following description of an embodiment, made by way of an indicative non-limiting example with reference to the annexed drawings, wherein:

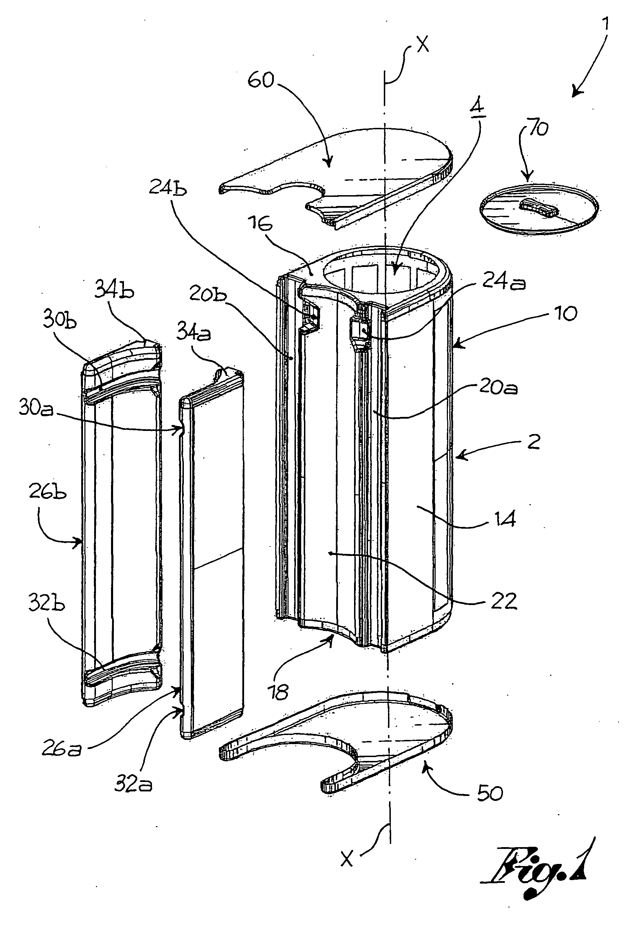

- figure 1 shows a perspective exploded view of a container according to the present invention;

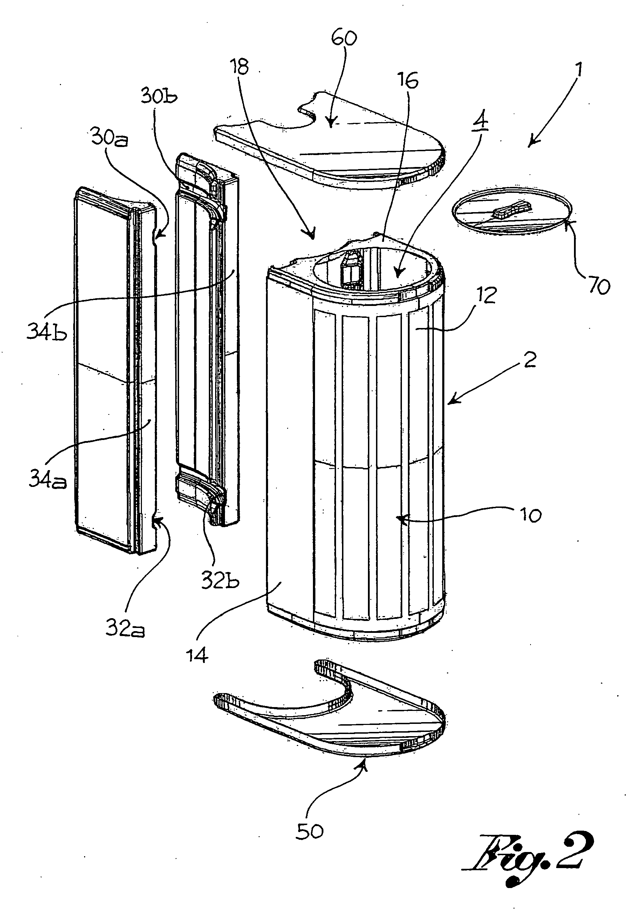

- figure 2 shows a further point of view of the container of figure 1;

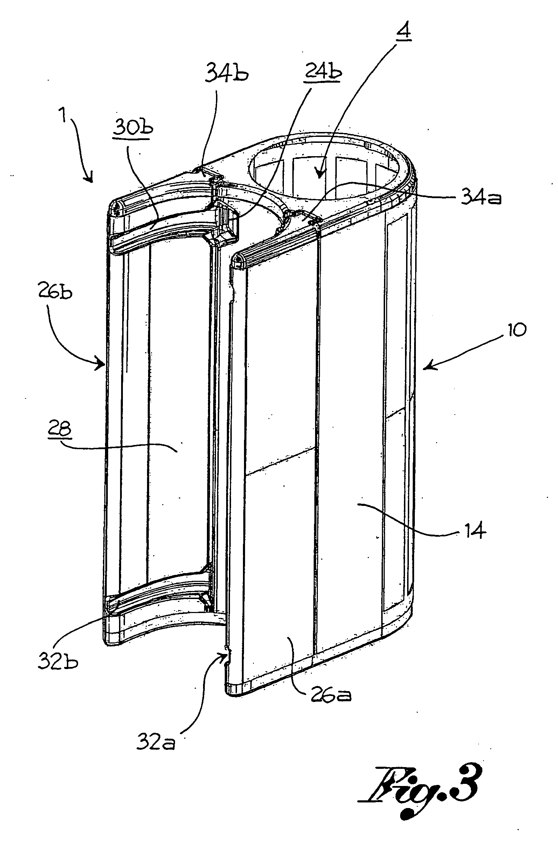

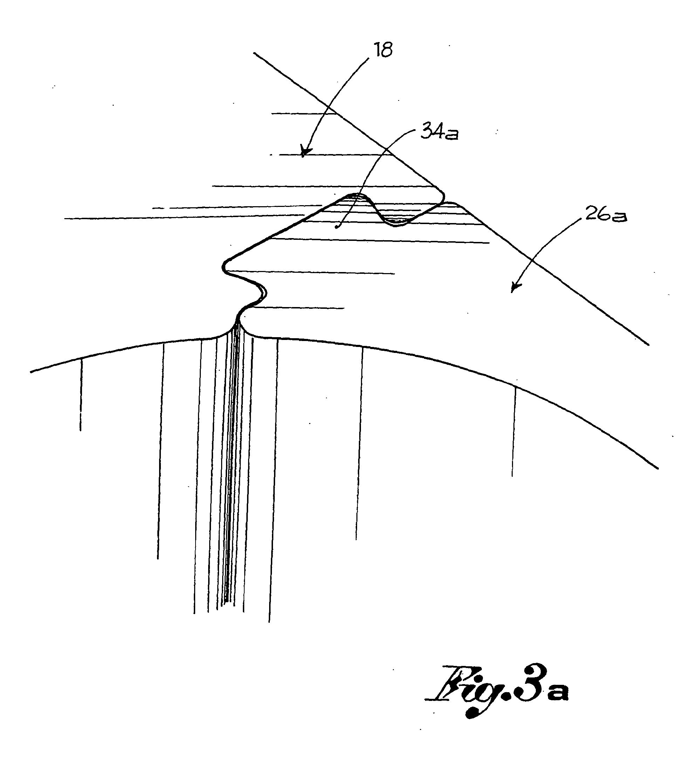

- figure 3 shows a perspective view of a front enclosure with wall extending from the container;

- figure 3a shows a detail of the connection between the front enclosure and an extension wall;

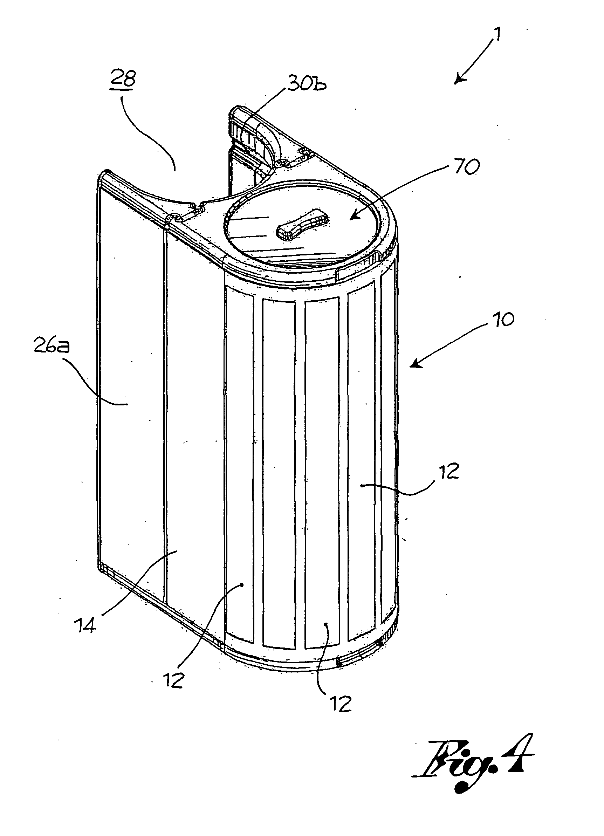

- figure 4 shows a perspective view of a front enclosure associated to extension walls and to a cap of the container;

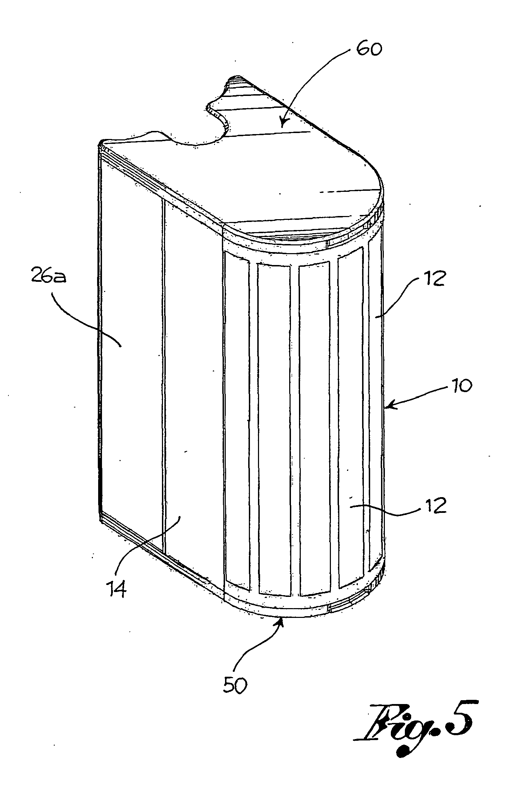

- figure 5 shows a perspective view of a front enclosure associated to a cover and to a footboard of the container;

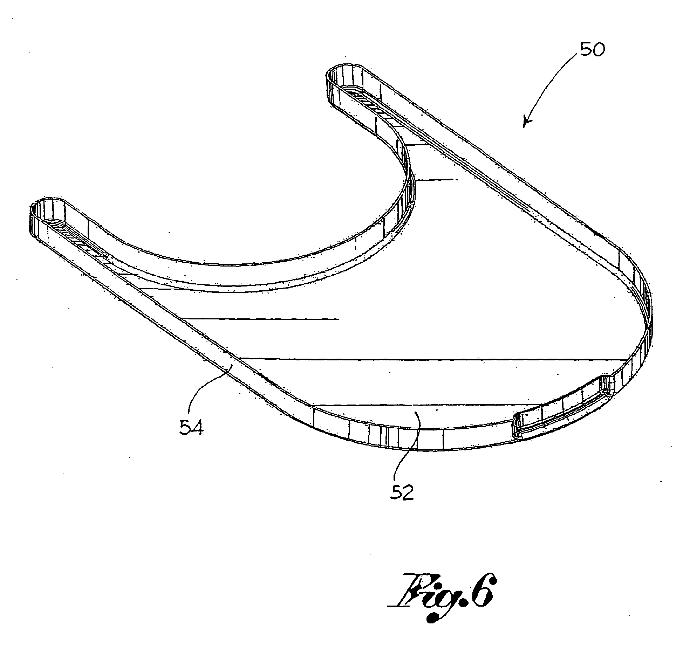

- figure 6 shows a perspective view of the footboard of figure 5;

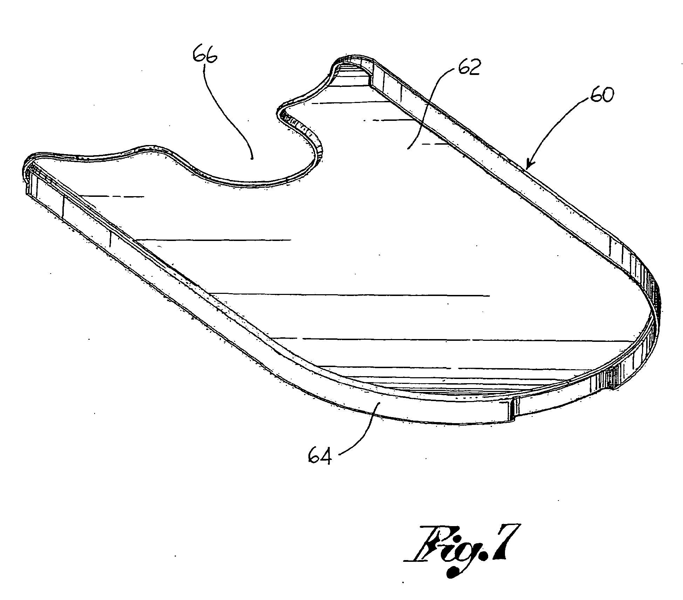

- figure 7 shows a perspective view of the cover of figure 5;

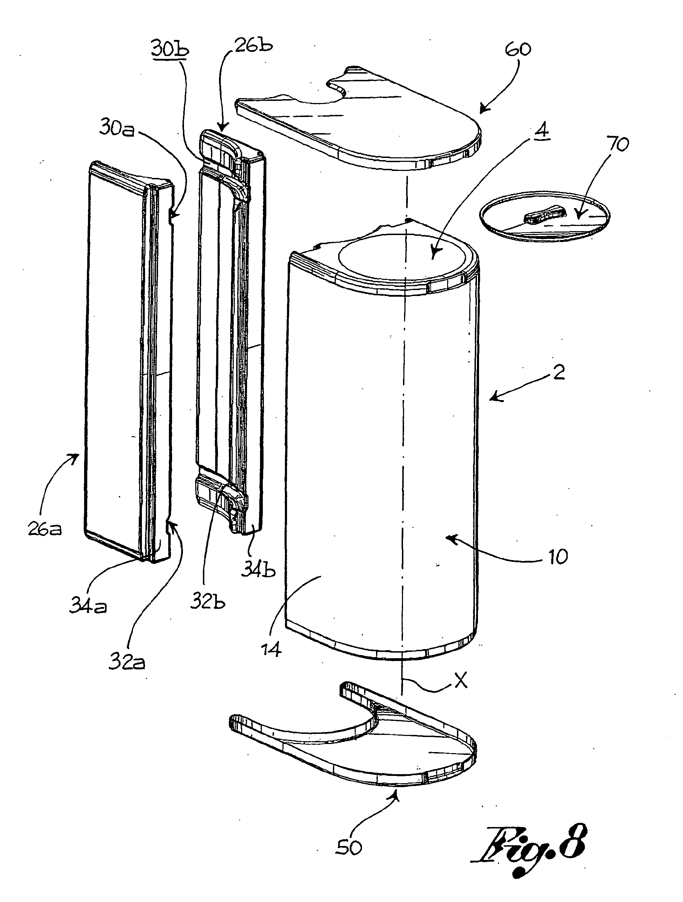

- figure 8 shows a perspective exploded view of a container according to a further embodiment;

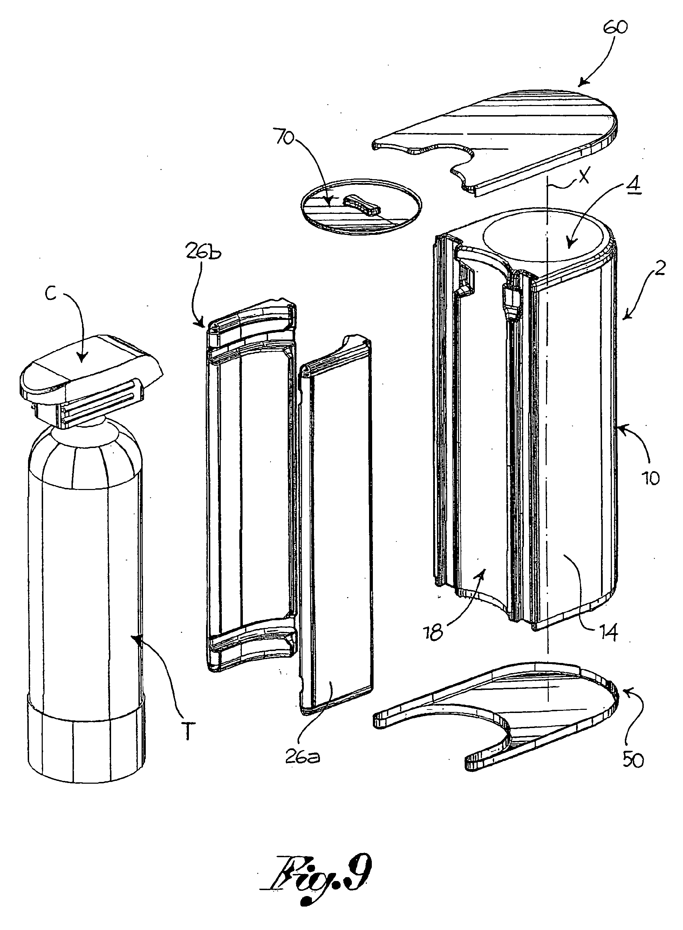

- figure 9 shows an exploded view of an assembly comprising the container of figure 8 and a tank;

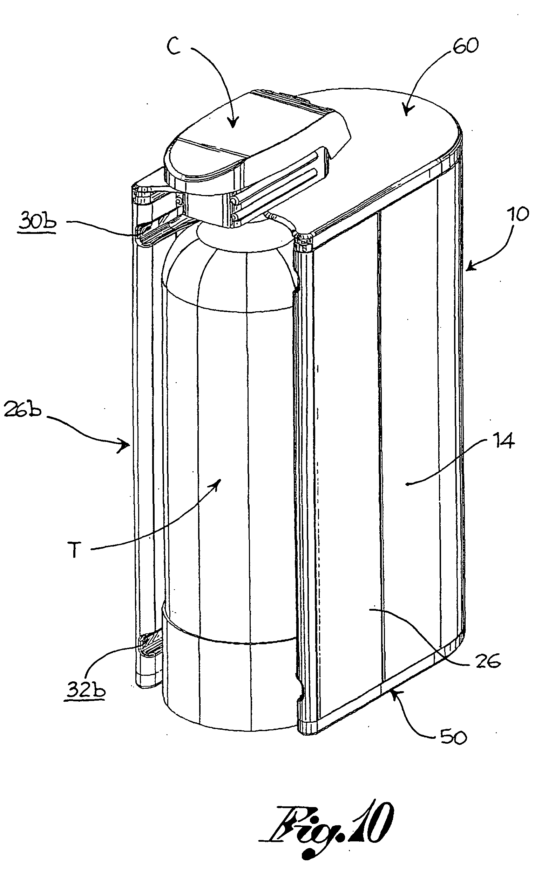

- figure 10 shows the assembly of figure 9 with assembled parts; and

- figures 11 and 12 show further embodiment variations of covers.

According to the annexed figures, reference numeral 1 globally denotes a container according to the present invention.

Container 1 comprises a front enclosure 2 having a front space 4 suitable for containing a pickle consisting of a mixture of salt and water already treated.

Generally, the salt is in the form of tablets and suitable for being used in water sweeteners.

Enclosure 2 exhibits an extension along a vertical axis X and comprises a front wall 10, of substantially arched shape, for example semi-cylindrical, which extends along said vertical axis X.

According to an embodiment, the front wall 10 comprises a plurality of vertical bands 12, for example flat, arranged in a circumferential succession on the wall itself, so as to impart a faceted appearance to said front wall.

According to a further embodiment, the front wall 10 is smooth.

Moreover, enclosure 2 comprises side vertical walls 14, 16, jointed to the ends of the front wall 10, preferably flat.

Moreover, enclosure 2 comprises a back wall 18, which connects the side walls 14, 16, to each other so that space 4 is annularly closed.

The back wall 18, on the surface facing externally relative to space 4, exhibits at least one vertical groove, which preferably extends by the entire vertical extension of the back wall 18.

For example, the back wall 18 exhibits a pair of vertical grooves 20a, 20b.

Preferably, moreover, the back wall 18 exhibits, on the outer surface, a vertical recess 22, for example arranged between grooves 20a, 20b, which extends by the entire vertical extension of the back wall 18.

Preferably, the outer surface of recess 22 is arched, so as to be concave outwards relative to the front space 4. In other words, the section of the recess surface with a plane perpendicular to axis X defines an arched profile.

For example, the outer surface of recess 22 coincides with a portion of circular cylindrical surface.

According to a further embodiment, the back wall 18 further exhibits a passage between groove 20a, 20b and recess 22.

For example, the back wall 18 exhibits a pair of passages 24a, 24b, arranged in the proximity of the top of the back wall, each passage forming a discontinuity in the inner walls of the respective grooves 20a, 20b, such as to put such grooves in communication with recess 22.

Moreover, container 1 comprises a pair of separate extension walls 26a, 26b, having substantially vertical extension, mechanically associable to enclosure 2 and removable therefrom.

In particular, the extension walls are connectable to the back wall 18 of the enclosure, so as to form a seating space 28 suitable for seating, at least partly, the system tank T.

In particular, recess 22 seats a portion of the side wall of the tank, compacting the container dimensions.

According to a preferred embodiment, the inner surface of the extension walls 26a, 26b, that is, the surfaces facing the seating space 28, exhibit a curved pattern.

Preferably, the inner curved surfaces of the extension walls are such as to substantially connect to the curved pattern of the outer surface of recess 22.

According to a preferred embodiment, each extension wall 26a, 26b internally exhibits, in the proximity of the top, a respective top channel 30a, 30b, for example having curvilinear pattern and such as to connect to the respective passage 24a, 24b obtained on the back wall 18 of enclosure 2.

Likewise, according to a further embodiment, each extension wall 26a, 26b internally exhibits, in the proximity of the base, a respective bottom channel 32a, 32b.

According to a preferred embodiment, the connection between the back wall 18 of enclosure 2 and each extension wall 26a, 26b is obtained through a shape coupling.

Preferably, each extension wall 26a, 26b comprises a vertical projection 34a, 34b, preferably continuous, suitable for coupling with the respective groove 20a, 20b of the back wall 18 of enclosure 2.

Moreover, container 1 comprises a base 50, wherein in the assembled configuration, enclosure 2 and the extension walls 26a, 26b connected to the enclosure are arranged.

Base 50 comprises a bottom 52, whereon enclosure 2 and the extension walls 26a, 26b rest, and a rise 54 that peripherally delimits bottom 52 of the base.

Base 50 couples by a shape coupling with the enclosure and the extension walls. To this end, at the front it exhibits an arched zone, for coupling with the front profile of the enclosure, and at the back two wings, for coupling with the extension walls. The system tank T arranges between the wings of the base.

Moreover, container 1 comprises a cover 60 suitable for covering enclosure 2 and the extension walls 26a, 26b. In other words, cover 60 is suitable for covering both the inner space 4 of enclosure 2 and at least partly the seating space 28.

Cover 60 comprises a covering plate 62 and a projection 64 that peripherally protrudes from the covering plate, at least along the front and side edge thereof.

Preferably, in fact, the back edge of the covering plate 62 is without projection.

The covering plate 62, at the back, is preferably shaped so as to form an inlet 66, substantially in central position, made to avoid interference between the container cover and control members C of the system, usually arranged at the head of tank T.

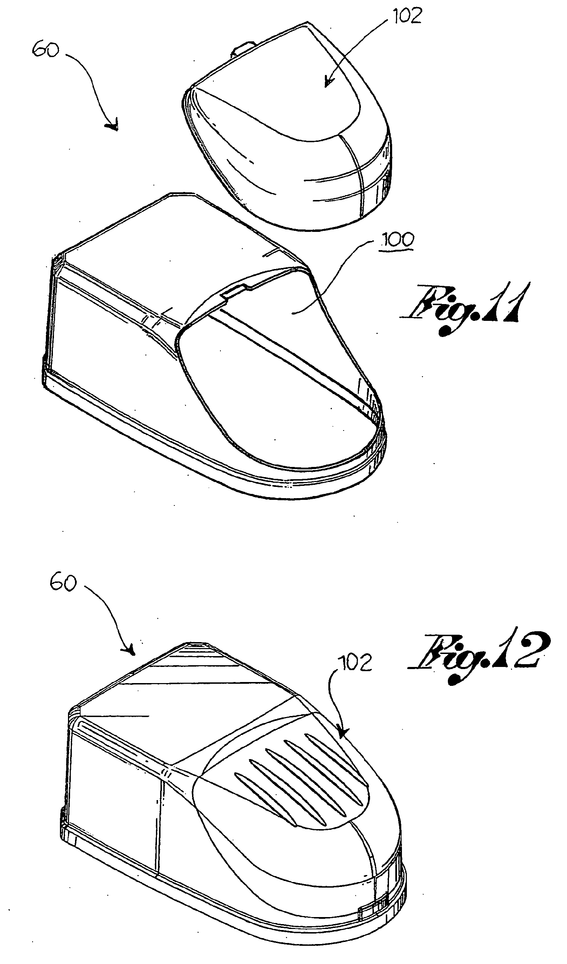

According to a further embodiment variation, cover 60 has a box shape and internally exhibits a space suitable for seating the control members C of the system, arranged at the head of tank T (figures 11 and 12).

In other words, according to such embodiment variation, cover 60 surmounts the control members C of the system, so as to conveniently hide them to sight, at least from a front observation point.

According to a further embodiment variation, cover 60 exhibits a wide window 100 that allows inspecting the interior of the container.

According to said embodiment variation, cover 60 comprises an inspection wall 102, transparent, semitransparent or opaque, suitable for being coupled with window 100 to prevent undesired access inside the container.

Moreover, container 1 comprises a cap 70 suitable for being coupled with enclosure 2 to close the inside space 4 from the top.

Preferably, the container components are made of plastic material.

According to a preferred manufacturing method of the container, enclosure 2 is made by blowing.

Innovatively, the container for a water treatment systems described above is particularly compact in size.

Advantageously, moreover, the system tank can be seated in the seating space, at least partly, thus remaining hidden to sight. The container therefore is particularly pleasant.

According to a further advantageous aspect, the manufacture of the container according to the present invention is particularly advantageous from an economic point of view, since the enclosure does not need particularly complex blowing machines.

It is clear that a man skilled in the art can make several changes to the container described above in order to meet specific and incidental needs, all falling within the scope of protection defined in the following claims.

## Claims

1. Container for a water treatment system, wherein said system comprises a water tank (T), said container comprising
- a front enclosure (2) having a front space (4), which extends along a vertical axis (X), suitable for containing a mixture containing treated water for running a maintenance cycle of said system, wherein the enclosure (2) comprises a front wall (10), side walls (14, 16) and a back wall (18) that annularly delimit the front space (4);
- a seating space (28), separate from the front space (4), suitable for seating at least partly said tank keeping it separate from the mixture;
wherein the container comprises a first extension wall (30a) and a second extension wall (30b), separate from the first extension wall (30a), said extension walls being removably associated to said front enclosure (2), and wherein the seating space (28) is partly delimited by said back wall (18) of the front enclosure and by said extension walls (30a, 30b).

2. Container according to claim 1, wherein the back wall (18), externally relative to the front space (4), exhibits a recess (22) that extends vertically on the outer surface of the back wall (18).

3. Container according to claim 2, wherein the recess (22) is suitable for seating a portion of the tank (T), for compacting the container dimensions,
wherein said recess is arched so as to be concave outwards relative to the front space (4).

4. Container according to claim 3, wherein the recess exhibits an outer surface coinciding with a portion of a circular cylindrical surface.

5. Container according to any one of the previous claims, wherein the outer surface of the back wall (18) exhibits a pair of vertical grooves (20a, 20b) and each extension wall (30a, 30b) comprises at least one vertical projection (34a, 34b), said projections being slidingly connectable in said grooves for associating the extension walls to the front enclosure.

6. A container according to claim 1, wherein
- the back wall (18), externally relative to the front space (4), exhibits a recess (22) that extends vertically on the outer surface of the back wall (18), and wherein
- the outer surface of the back wall (18) exhibits a pair of vertical grooves (20a, 20b) and each extension wall (26a, 20b) comprises at least one vertical projection (34a, 34b), said projections being slidingly connectable in said grooves for associating the extension walls to the front enclosure, and wherein
- said recess is arranged between said grooves.

7. A container according to claim 6, wherein
- the back wall (18) exhibits a pair of passages (24a, 24b), each passage forming a discontinuity in the inner walls of the respective grooves (20a, 20b) such as to put such grooves in communication with the recess, and wherein
- each extension wall (26a, 26b) internally exhibits, in the proximity of the top, a respective top channel (30a, 30b), such as to connect to the respective passage (24a, 24b) obtained on the back wall (18) of the enclosure, thus forming a duct for seating system tubes.

8. A container according to claim 7, wherein each extension wall (26a, 26b) internally exhibits, in the proximity of the base, a respective bottom channel (32a, 32b), thus making ducts for seating system tubes.

9. Container according to any one of the previous claims, comprising a base (50), wherein in an assembled configuration of the container, the enclosure (2) and the extension walls (26a, 26b) are arranged.

10. Container according to any one of the previous claims, comprising a cover (60) suitable for covering the enclosure (2) and the extension walls (26a, 26b).

11. Container according to any one of the previous claims, comprising a cap (70) suitable for being coupled with the enclosure (2) for closing the front space (4) from the top.

12. Container according to any one of the previous claims, wherein the enclosure (2) and the extension walls (26a, 26b) are made of plastic material.

13. Container according to any one of the previous claims, wherein the enclosure (2) is made in a single piece,
wherein the enclosure (2) is made by blowing.

14. Water treatment system comprising:
- a tank (T);
- a container (1) made according to any one of the previous claims, the tank (T) being at least partly seated in the seating space (28) of the container (1).

15. System according to claim 14, comprising control means (C) of the system, arranged on the tank (T) and protruding at least partly from a cover (60) of the container (1).

## Patentansprüche

1. Behälter für ein Wasserbehandlungssystem, wobei das genannte System einen Wassertank (T) aufweist und der genannte Behälter folgendes auf-weist:
- eine vordere Einfassung (2) mit einem vorderen Raum (4), die sich entlang einer vertikalen Achse (X) erstreckt und dazu geeignet ist, eine Mischung mit behandeltem Wasser zum Betrieb eines Wartungskreis-laufes für das genannte System zu enthalten, wobei die genannte Einfassung (2) eine vorderen Wand (10), Seitenwände (14, 16) und eine hintere Wand (18) aufweist, die den vorderen Raum (4) ringförmig begrenzt;
- einen Auflageraum (28), die von dem vorderen Raum (4) getrennt ist und dazu geeignet ist, wenigstens einen Teil des genannten Tanks aufzunehmen, um ihn von der Mischung zu trennen,
wobei der Behälter eine erste Verlängerungswand (30a) und eine zweite Verlängerungswand (30b) aufweist, die von der ersten Verlängerungswand (30a) getrennt ist, wobei die genannten Verlängerungswände der genannten vorderen Einfassung (2) entfernbar zugeordnet sind,
und wobei der Aufnahmeraum (28) teilweise durch die genannte hintere Wand (18) der vorderen Einfassung und durch die genannten Verlänge-rungswände (30a, 30b) begrenzt ist.

2. Behälter nach Anspruch 1, wobei die hintere Wand (18), auf der Außenseite relativ zu dem vorderen Raum (4), eine Ausnehmung (22) aufweist, die sich auf der Außenfläche der hinteren Wand (18) senkrecht erstreckt.

3. Ein Behälter nach Anspruch 2, wobei die Ausnehmung (22) geeignet ist, einen Abschnitt des Tanks (T) aufnehmen, um die Abmessungen des Behälters zu verdichten, wobei die genannte Ausnehmung so bogenförmig ausgeführt ist, daß sie gegenüber dem vorderen Raum (4) nach außen hin konkav verläuft.

4. Behälter nach Anspruch 3, wobei die Ausnehmung eine Außenfläche aufweist, die mit einem Abschnitt einer kreisförmigen zylindrischen Fläche zusammenfällt.

5. Behälter nach einem der vorhergehenden Ansprüche, wobei die Außenfläche der hinteren Wand (18) zwei senkrechte Rillen (20a, 20b) aufweist und jede Verlängerungswand (30a, 30b) mit wenigstens einem senkrechten Vorsprung (34a, 34b) versehen ist, wobei die genannten Vorsprünge schiebenderweise mit den genannten Rillen verbindbar sind, um die Verlängerungswände der vorderen Einfassung zuzuordnen.

6. Behälter nach Anspruch 1, wobei
- die hintere Wand (18), auf der Außenseite relativ zu dem vorderen Raum (4), eine Ausnehmung (22) aufweist, die senkrecht auf der Au-ßenfläche der hinteren Wand (18) verläuft und wobei
- die Außenfläche der hinteren Wand (18) zwei senkrechte Rillen (20a, 20b) aufweist und jede Verlängerungswand (26a, 20b) mit wenigstens einem senkrechten Vorsprung (34a, 34b) versehen ist, wobei die Vor-sprünge schiebenderweise in den genannten Rillen verbindbar sind, um die Verlängerungswände der vorderen Einfassung zuzuordnen, und wobei
- die genannte Ausnehmung zwischen den genannten Rillen angeordnet ist.

7. Behälter nach Anspruch 6, wobei
- die hintere Wand (18) zwei Passagen (24a, 24b) aufweist, wobei jede Passage eine Unterbrechung in den inneren Wänden der entsprechenden Rillen (20a, 20b) bildet und zwar in der Weise, dass die genannten Rillen mit der Ausnehmung kommunizieren, und wobei
- jede Verlängerungswand (26a, 26b) auf der Innenseite in der Nähe des oberen Endes einen entsprechenden oberen Kanal (30a, 30b) aufweist und zwar in der Weise, dass er mit der entsprechenden auf der hinteren Wand (18) der Einfassung gebildeten Passage (24a, 24b) in Verbindung steht und so eine Durchführung für Aufnahmesystemrohre bildet.

8. Behälter nach Anspruch 7, wobei jede Verlängerungswand (26a, 26b) auf der Innenseite in der Nähe der Bo-denfläche einen entsprechenden Bodenkanal (32a, 32b) bildet und auf diese Weise Durchführungen für Aufnahmesystemrohre bildet.

9. Behälter nach einem der vorhergehenden Ansprüche, der einen Boden (50) aufweist, wobei die Einfassung (2) und der Verlängerungswände (26a, 26b) in der zusammengebauten Form des Behälters angeordnet sind.

10. Behälter nach einem der vorhergehenden Ansprüche, der eine Abdeckung (60) aufweist, die geeignet ist, die Einfassung (2) und die Verlängerungs-wände (26a, 26b) abzudecken.

11. Behälter nach einem der vorhergehenden Ansprüche, der eine Kappe (70) aufweist, die mit der Einfassung (2) verbunden werden kann, um den vorde-ren Raum (4) von oben aus zu schließen.

12. Behälter nach einem der vorhergehenden Ansprüche, wobei die Einfassung (2) und der Verlängerungswände (26a, 26b) aus einem Kunststoff hergestellt sind.

13. Behälter nach einem der vorhergehenden Ansprüche, wobei die Einfassung (2) einteilig hergestellt ist, wobei die Einfassung (2) in einem Blasverfahren hergestellt wird.

14. Wasserbehandlungssystem, das
- einen Tank (T) und
- einen Behälter (1) aufweist, der nach einem der vorhergehenden An-sprüche herstellt ist, wobei der Tank (T) wenigstens teilweise in einem Aufnahmeraum (28) des Behälters (1) aufgenommen ist.

15. System nach Anspruch 14, das Steuermittel (C) für das System aufweist, die auf dem Tank (T) angeordnet sind und wenigstens teilweise aus einer Abdeckung (60) des Behälters (1) herausragen.

## Revendications

1. Conteneur pour un système de traitement de l'eau, dans lequel ledit système comprend un réservoir d'eau (T), ledit conteneur comprenant:
- une enceinte avant (2) ayant un espace avant (4), qui s'étend le long d'un axe vertical (X) approprié pour contenir un mélange contenant de l'eau traitée pour effectuer un cycle de maintenance dudit système, dans lequel l'enceinte (2) comprend une paroi avant (10), des parois latérales (14, 16) et une paroi arrière (18) qui délimitent en forme annulaire l'espace avant (4);
- un espace récepteur (28), séparé de l'espace avant (4), approprié pour recevoir au moins en partie ledit réservoir, en le maintenant séparé du mélange;
dans lequel le conteneur comprend une première paroi d'extension (30a) et une seconde paroi d'extension (30b), séparée de la première paroi d'extension (30a), lesdites parois d'extension étant associées de manière amovible à ladite enceinte avant (2), et dans lequel l'espace récepteur (28) est en partie délimité par ladite paroi arrière (18) de l'enceinte avant et par lesdites parois d'extension (30a, 30b).

2. Conteneur selon la revendication 1, dans lequel la paroi arrière (18), externe par rapport à l'espace avant (4), présente un évidement (22) qui s'étend verticalement sur la surface externe de la paroi arrière (18).

3. Conteneur selon la revendication 2, dans lequel l'évidement (22) est approprié pour recevoir une partie du réservoir (T) pour resserrer les dimensions du conteneur, dans ledit évidement est arqué de manière à être concave vers l'extérieur par rapport à l'espace avant (4).

4. Conteneur selon la revendication 3, dans lequel l'évidement présente une surface externe coïncidant avec une partie d'une surface cylindrique circulaire.

5. Conteneur selon l'une quelconque des revendications précédentes, dans lequel la surface externe de la paroi arrière (18) présente une paire de rainures verticales (20a, 20b) et chaque paroi d'extension (30a, 30b) comprend au moins une saillie verticale (34a, 34b), lesdites saillies pouvant être raccordées à coulissement dans lesdites rainures pour associer les parois d'extension à l'enceinte avant.

6. Conteneur selon la revendication 1, dans lequel:
- la paroi arrière (18), externe par rapport à l'espace avant (4), présente un évidement (22) qui s'étend verticalement sur la surface externe de la paroi arrière (18), et dans lequel:
- la surface externe de la paroi arrière (18) présente une paire de rainures verticales (20a, 20b) et chaque paroi d'extension (26a, 20b) comprend au moins une saillie verticale (34a, 34b), lesdites saillies pouvant être raccordées à coulissement dans lesdites rainures pour associer les parois d'extension à l'enceinte avant et dans lequel:
- ledit évidement est ménagé entre lesdites rainures.

7. Conteneur selon la revendication 6, dans lequel:
- la paroi arrière (18) présente une paire de passages (24a, 24b), chaque passage formant une discontinuité dans les parois internes des rainures respectives (20a, 20b) afin de mettre ces rainures en communication avec l'évidement, et dans lequel:
- chaque paroi d'extension (26a, 26b) présente intérieurement, à proximité de la partie supérieure, un canal supérieur respectif (30a, 30b), de manière à se raccorder au passage respectif (24a, 24b) obtenu sur la paroi arrière (18) de l'enceinte, formant ainsi un conduit pour recevoir des tubes du système.

8. Conteneur selon la revendication 7, dans lequel chaque paroi d'extension (26a, 26b) présente intérieurement, à proximité de la base, un canal inférieur respectif (32a, 32b), formant ainsi des conduits pour recevoir des tubes du système.

9. Conteneur selon l'une quelconque des revendications précédentes, comprenant une base (50), dans lequel, en configuration assemblée du conteneur, l'enceinte (2) et les parois d'extension (26a, 26b) sont aménagées.

10. Conteneur selon l'une quelconque des revendications précédentes, comprenant une coiffe (60) appropriée pour recouvrir l'enceinte (2) et les parois d'extension (26a, 26b).

11. Conteneur selon l'une quelconque des revendications précédentes, comprenant un couvercle (70) approprié pour être couplé à l'enceinte (2) afin de fermer l'espace avant (4) par le haut.

12. Conteneur selon l'une quelconque des revendications précédentes, dans lequel l'enceinte (2) et les parois d'extension (26a, 26b) sont fabriqués en matériau plastique.

13. Conteneur selon l'une quelconque des revendications précédentes, dans lequel l'enceinte (2) est fabriquée d'une seule pièce, dans lequel l'enceinte (2) est fabriquée par soufflage.

14. Système de traitement de l'eau, comprenant:
- un réservoir (T);
- un conteneur (1) fabriqué selon l'une quelconque des revendications précédentes, le réservoir (T) étant au moins en partie reçu dans l'espace récepteur (28) du conteneur (1).

15. Système selon la revendication 14, comprenant des moyens de commande (C) du système, aménagés sur le réservoir (T) et faisant saillie au moins en partie d'une coiffe (60) du conteneur (1).
